# EUROPEAN PATENT SPECIFICATION

(11) **EP 1 388 237 B1**
(45) Date of publication and mention of the grant of the patent: **24.12.2008**
(21) Application number: 02769311.8
(22) Date of filing: 03.05.2002
(51) Int. Cl.: H04L 12/56

(54) **EMERGENCY PACKET DATA SERVICE**
PAKETDATENDIENST FÜR DEN NOTFALL
SERVICE DE TRANSMISSION DE DONNEES PAR PAQUETS EN CAS D'URGENCE

(30) Priority: 04.05.2001 US 848229
(43) Date of publication of application: 11.02.2004
(73) Proprietor: Ericsson Inc., Plano, TX 75024 (US)
(72) Inventor: DIACHINA, John, Garner, NC 27529 (US); RYDNELL, Gunnar, S-412 66 Göteborg (SE)
(74) Representative: Kühn, Friedrich Heinrich
(86) International application number: PCT/US2002/013908
(87) International publication number: WO 2002/091687

(56) References cited:
- WO-A-00/07393
- WO-A-01/80587
- WO-A-02/03718
- JUNEJA B; ANAND S S: "Location services using cellular digital packet data" PERSONAL WIRELESS COMMUNICATIONS, IEEE INTERNATIONAL CONFERENCE IN NEW DELHI, 19 February 1996 (1996-02-19), - 21 February 1996 (1996-02-21) pages 222-226, XP010158316 IEEE, New York, US

## Description

### BACKGROUND OF THE INVENTION

The present invention relates generally to packet data networks and, more particularly, to an emergency packet data service.

Packet data devices must be "attached" (i.e., become registered for mobility management purposes) prior to being allowed to originate any packet data transactions. This typically consumes a few seconds of time.

The packet data device must also have an activated packet data protocol (PDP) context (i.e., become formally recognized and accepted by the packet service infrastructure) prior to being allowed to originate any packet data transactions. This is typically a very time consuming activity (e.g., tens of seconds) that must be done as a precursory activity whenever a packet data user powers on with the intent of sending packet data of any kind.

Therefore, to originate an emergency packet transmission, a user of a packet data device must wait for these preliminary activities to be completed, thereby delaying the actual transmission of the packet data. In addition, the user must then generate an emergency packet data transmission including the destination address of a receiving device that is capable of providing the desired emergency service. This further adds time to the process of originating and transmitting an emergency message.

WO 00/07393 discloses a method for communicating emergency messages using non-voice connections by allowing users to place an emergency call with the specific purpose of sending an emergency data message using Short Message Service (SMS).

Juneja B; Anand S S: "Location Services Using Cellular Digital Packet Data", Personal Wireless Communication, IEEE International Conference in New Delhi, 19 Feb 1996 - 21 Feb 1996, discusses the use of Cellular Digital Packet Data (CDPD) to provide location services.

As applications of location services, the article lists fleet management, packet tracking by courier companies, incident reporting, assistance for roadside emergency, emergency vehicle tracking and dynamic route guidance. According to the article, applications for offering assistance for roadside emergencies require an automatic system in the mobile to generate a request to an emergency service along with its location on a need basis.

### BRIEF SUMMARY OF THE INVENTION

The invention is defined in independent claims 1 and 8, which relate to system (claim 8) and a method (claim 1) for receiving and forwarding emergency packet data.

The system includes a base station that receives a packet channel request message including an emergency indication from a mobile terminal and transmits an uplink assignment message to the mobile terminal. The system also includes a first node that receives the emergency packet data via an uplink of a packet data channel and forwards the emergency packet data and the emergency indication. The system further includes a second node that receives the emergency packet data and the emergency indication from the first node and determines a destination address for the emergency packet data, where the destination address identifies an emergency service entity. The second node also forwards the packet data to the emergency service entity identified by the destination address.

### BRIEF DESCRIPTION OF THE DRAWINGS

The accompanying drawings, which are incorporated in and constitute a part of this specification, illustrate the invention and, together with the description, explain the invention. In the drawings,
Fig. 1 illustrates an exemplary network in which systems and methods consistent with the present invention may be implemented;
Fig. 2 illustrates an exemplary configuration of a mobile terminal of Fig. 1 consistent with the present invention; and
Figs. 3-5 illustrate exemplary processing for originating and completing an emergency packet data transaction, in an implementation consistent with the present invention.

### DETAILED DESCRIPTION OF THE INVENTION

The following detailed description of the invention refers to the accompanying drawings. The same reference numbers in different drawings identify the same or similar elements. Also, the following detailed description does not limit the invention. Instead, the scope of the invention is defined by the appended claims and equivalents.

Systems and methods consistent with the present invention enable a mobile terminal user to quickly originate a packet data transaction that will be treated with emergency priority. The emergency packet data may then be automatically routed to a designated emergency dispatch center.

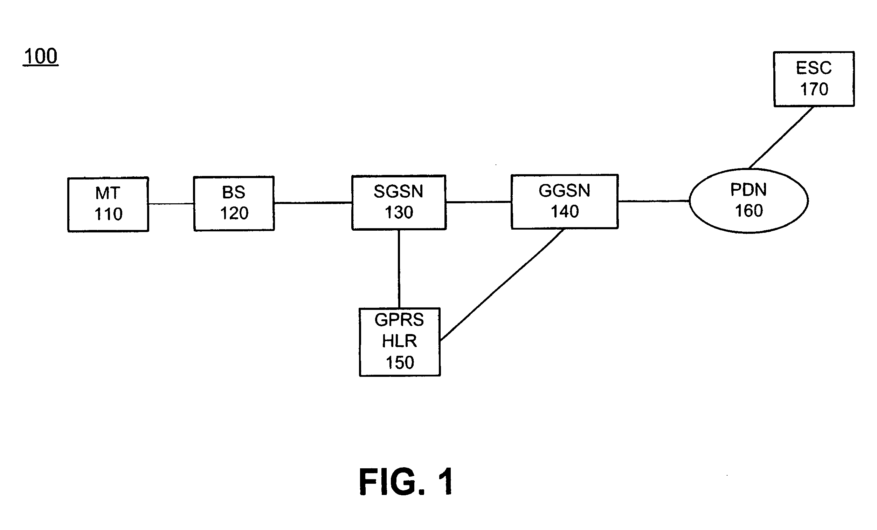

Fig. 1 illustrates an exemplary network 100 in which systems and methods consistent with the present invention may be implemented. The network 100 may include a mobile terminal (MT) 110, a base station (BS) 120, a Serving General Packet Radio Service (GPRS) Support Node (SGSN) 130, a Gateway GPRS Support Node (GGSN) 140, a GPRS Home Location Register (HLR) 150, a Packet Data Network (PDN) 160 and an emergency service center (ESC) 170. The number of components illustrated in Fig. 1 is provided for simplicity. It will be appreciated that a typical network 100 may include more or less components than are illustrated in Fig. 1.

The mobile terminal 110 allows a mobile terminal user to interact with other devices via PDN 160. It is assumed hereafter that the mobile terminal 110 communicates according to the Enhanced General Packet Radio Service (EGPRS)/EGPRS-136 protocol to send and receive data via the PDN 160. As described herein, the mobile terminal 110 may include a cellular radiotelephone with or without a multi-line display; a Personal Communications System (PCS) terminal that may combine a cellular radiotelephone with data processing, facsimile, and data communications capabilities; a Personal Digital Assistant (PDA) that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices.

The base station 120 allows other devices to communicate with mobile terminal 110. Base station 120 may provide the mobile terminal 110 with packet data services on, for example, a 200 kHz channel. The base station 120 may include one or more base transceiver stations (not shown) and a base station controller (not shown). The base transceiver stations may transmit radio signals to and receive radio signals from the mobile terminal 110. The base station controller may interconnect a number of base transceiver stations to the SGSN 130.

The SGSN 130 may include circuitry for controlling packet data sessions between the mobile terminal 110 and other devices. The SGSN 130 may connect those sessions to the GGSN 140. The GPRS HLR 150 may include one or more databases that store and manage subscriber data for a subscriber's packet data services. Upon interrogation by the SGSN 130, the GPRS HLR 150 may provide packet data subscription-related information. Upon interrogation by the GGSN 140, the GPRS HLR 150 may provide routing information for the indicated subscriber.

The GGSN 140 may include circuitry for connecting packet data sessions between the mobile terminal 110 and the PDN 160. The PDN 160 may include one or more conventional networks for routing data packets. The ESC 170 may include an entity designated to receive emergency data transmissions via PDN 160. For example, the ESC 170 may include a dispatch center that receives emergency packet data messages and responds to the received messages via PDN 160, as described in more detail below.

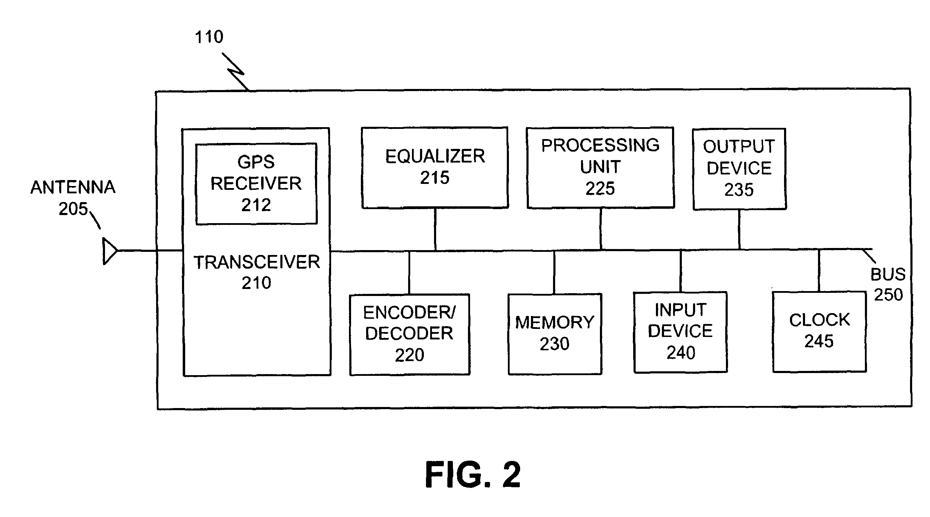

Fig. 2 illustrates an exemplary configuration of mobile terminal 110 consistent with the present invention. As illustrated, the mobile terminal 110 may include an antenna 205, a transceiver 210, an equalizer 215, an encoder/decoder 220, a processing unit 225, a memory 230, an output device 235, an input device 240, a clock 245 and a bus 250.

The antenna 205 may include one or more conventional antennas capable of transmitting and receiving information. The transceiver 210 may include well-known transceiver circuitry for transmitting and/or receiving data bursts in a network, such as network 100, via the antenna 205. The transceiver 210 may also include a GPS receiver 212 that aids the mobile terminal 110 in determining its position within the network 100.

The equalizer 215 may include one or more conventional devices, such as a device for implementing conventional Viterbi trellises that estimate received symbol sequences and remove intersymbol interference. The encoder/decoder 220 may include conventional circuitry for encoding and/or decoding received or transmitted symbol sequences.

The processing unit 225 may include any type of conventional processor or microprocessor that interprets and executes instructions. The processing unit 225 may perform all data processing functions for inputting, outputting, and processing of data. The memory 230 may provide permanent, semi-permanent, or temporary working storage of data and instructions for use by processing unit 225 in performing processing functions. Memory 230 may include large-capacity storage devices, such as a magnetic and/or optical recording medium and its corresponding drive.

The output device 235 may include one or more conventional mechanisms that output information to an operator, including a display, a printer, a speaker, etc. The input device 240 may include one or more conventional mechanisms that permit the operator to input information to the mobile terminal 110, such as a keypad, a mouse, a microphone, a pen, voice recognition and/or biometric mechanisms, etc. The output and input devices 235 and 240 may include additional devices (not shown) for converting received information from a first format into a second format.

The clock 245 may include conventional circuitry for performing timing-related operations associated with one or more functions performed by the mobile terminal 110. The clock 245 may include, for example, one or more counters. The bus 250 may include one or more conventional buses that interconnect the various components of mobile terminal 110 to permit the components to communicate with one another.

The configuration of mobile terminal 110, shown in Fig. 2, is provided for illustrative purposes only. One skilled in the art will recognize that other configurations may be employed. Moreover, one skilled in the art will appreciate that a typical mobile terminal 110 may include other devices that aid in the reception, transmission, or processing of data.

The mobile terminal 110, consistent with the present invention, may provide a distinct indication at packet data transaction set up time that the packet data transaction is for an emergency (e.g., the user may indicate a quality of service higher than the quality of service typically indicated for a non-emergency packet data transaction). This indication may be used to assure priority treatment regarding packet channel resource assignments. For example, in EGPRS/EGPRS-136 systems, this may be accomplished by defining a new type of Packet Channel Request message, such as an "Emergency-Channel-Request."

In addition, the mobile terminal 110 originating an emergency packet data transaction, if not already attached to the packet data infrastructure and possessing an active PDP context, may be spared the overhead of going through these activities. According to an exemplary implementation of the present invention, a mobile terminal 110 may avoid having to formally attach itself to the infrastructure. Additionally, the mobile terminal 110 may avoid the need to activate a PDP context by supporting a special pool of Internet Protocol (IP) addresses in the GGSN 140. These special IP addresses may be used exclusively for emergency packet data transactions originating from a mobile terminal 110 that does not already have an active PDP context (i.e., they represent preactivated packet data contexts). The GGSN 140 may assign one of these special IP addresses and associate it with the identity (e.g., the International Mobile Subscriber Identity (IMSI)) of the mobile terminal 110 originating the emergency packet data transaction. Using this approach, a mobile terminal 110 may power on and send an emergency packet data transaction with minimum delay.

The network 100, consistent with the present invention, may also verify that an emergency packet transaction is actually associated with an emergency, in order to prevent abuse of this feature by users wanting to receive the best possible treatment for non-emergency packet data transactions. In an exemplary implementation of the present invention, processing within the air interface access stratum (e.g., the media access control (MAC) layer) provides an explicit indication that an emergency packet data transaction is being attempted. Once received by the radio access network, the emergency status information, along with the emergency packet data itself, may be passed onto the network infrastructure where a destination IP address may be provided according to a database of emergency IP addresses. It should be noted that the destination IP address may be selected based on the part of the radio access network used by the mobile terminal 110 when sending the emergency packet data transaction. Having the network infrastructure determine the destination IP address ensures that the emergency packet data transaction feature may not be abused for ordinary packet service usage, such as, for example, surfing the Internet.

The mobile terminal 110 may perform the above processing and processing described in more detail below in response to the processing unit 225 executing sequences of instructions contained in a computer-readable medium, such as memory 230. It should be understood that a computer-readable medium may include one or more memory devices. The instructions may be read into memory 230 from another computer-readable medium or from a separate device via transceiver 210. Execution of the sequences of instructions contained in memory 230 causes processing unit 225 to perform the process steps that will be described hereafter. In alternative embodiments, hard-wired circuitry may be used in place of or in combination with software instructions to implement the present invention. Thus, the present invention is not limited to any specific combination of hardware circuitry and software.

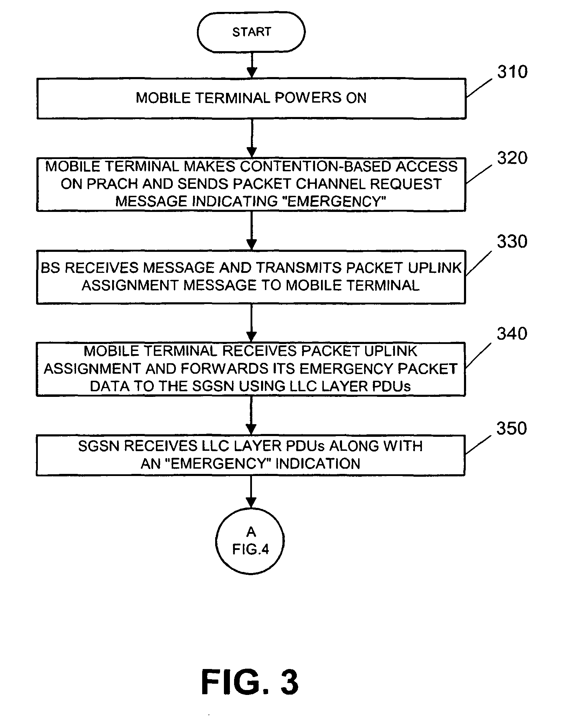

Figs. 3-5 illustrate processing for originating and completing an emergency packet data transaction, according to an exemplary implementation of the present invention. Processing begins when mobile terminal 110 powers on [Fig. 3, step 310]. Assume that the user of mobile terminal 110 wishes to originate an emergency packet data transaction.

For example, a hearing-impaired mobile terminal 110 user may experience an emergency situation that would be best served by a 2-way packet data transaction involving an ESC, such as ESC 170. In other situations, a mobile terminal 110 user may experience an emergency situation where only packet data service is available (i.e., there is no voice service available in the service area). Another situation may occur when a mobile terminal 110 user experiences an emergency situation in an area where both packet data service and voice service arc available, but the nature of the emergency is such that data needs to be forwarded to an ESC (e.g., GPS location information, medical information, etc.). Any number of other scenarios may occur where the mobile terminal 110 user may require emergency service that is best supported using packet data transmissions.

In any event, the mobile terminal 110 makes a contention-based access on a packet random access channel (PRACH) and sends a Packet Channel Request message indicating "emergency" [step 320]. The BS 120 (Fig. 1) receives the Packet Channel Request message. The BS 120, consistent with the present invention, may transmit a Packet Uplink Assignment message to the mobile terminal 110 [step 330]. The Packet Uplink Assignment message may assign one or more radio blocks on the uplink of a packet data channel (PDCH) to the mobile terminal 110. This may be known as temporary block flow (TBF) establishment.

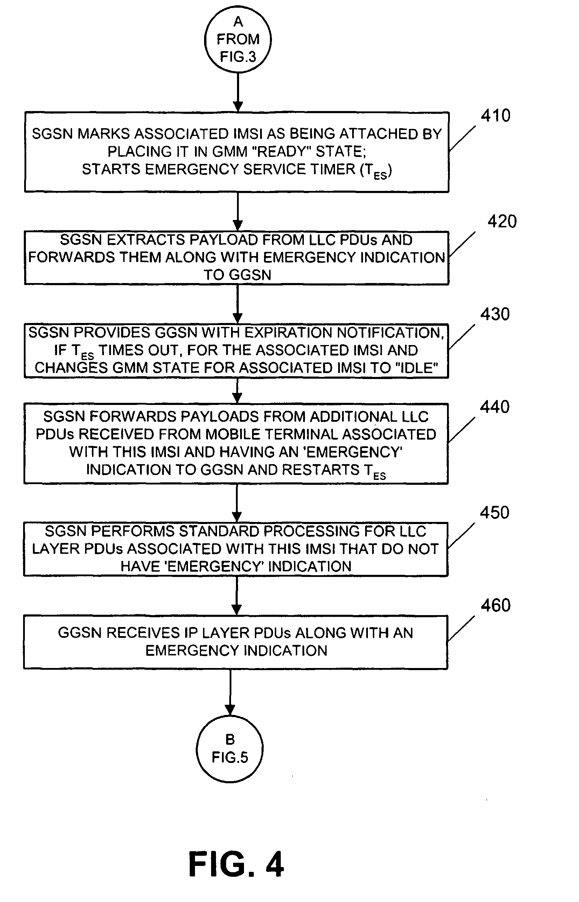

The mobile terminal 110 receives the Packet Uplink Assignment message and thereby has its contention-based access acknowledged [step 340]. The mobile terminal 110 then uses the uplink TBF to forward its emergency packet data to the SGSN 130 using logical link control (LLC) layer protocol data units (PDUs) [step 340]. The SGSN 130 receives the LLC PDUs along with an "emergency" indication [step 350] and processing continues as illustrated in Fig. 4. The process by which the "emergency" indication is conveyed from the BS 120 to the SGSN 130, for every complete LLC PDU sent from the BS 120 to the SGSN 130, has not been described herein in order not to unduly obscure the thrust of the present invention. However, the procedure and means needed to perform such a transaction would be obvious to one of ordinary skill in this art. In addition, it should be understood that modifications to the base station system GPRS protocol (BSSGP) may be required to support such a transaction.

After receiving the LLC PDUs from the mobile terminal 110, the SGSN 130 marks the associated IMSI (i.e., the IMSI identifying mobile terminal 110) as being "attached" by placing it in the GPRS mobility management (GMM) "Ready" state [Fig. 4, step 410]. The GMM Ready state indicates that mobile terminal 110 is able to use network-related services to receive packet data. The SGSN 130 also may start an "emergency service" timer (i.e., a unique timer Tₑₛ specific to emergency service) [step 410]. The timer Tₑₛ may be set to any particular time period based on the particular system requirements. In an exemplary implementation consistent with the present invention, the timer Tₑₛ may count until a packet data response is received by SGSN 130 from the ESC 170. When packet data is received from ESC 170, the timer Tₑₛ may be reset.

The SGSN 130 may also extract the payload from the LLC layer PDUs (i.e., IP layer PDUs) and forward them along with an "emergency" indication to the GGSN 140 [step 420]. The process by which the "emergency indication" is conveyed to the GGSN 140 has not been described herein in order not to unduly obscure the thrust of the present invention. However, the procedure and means needed to perform such a transaction would be obvious to one of ordinary skill in this art. In addition, it should be understood that modifications to the GPRS tunneling protocol (GTP) may be required may be required to support such a transaction.

In any event, if timer Tₑₛ "times out" (i.e., the predetermined time period has been reached without Tₑₛ being reset), the SGSN 130 may provide the GGSN 140 with an "expiration" notification for the associated IMSI and may change the GMM state for this IMSI to "idle" [step 430].

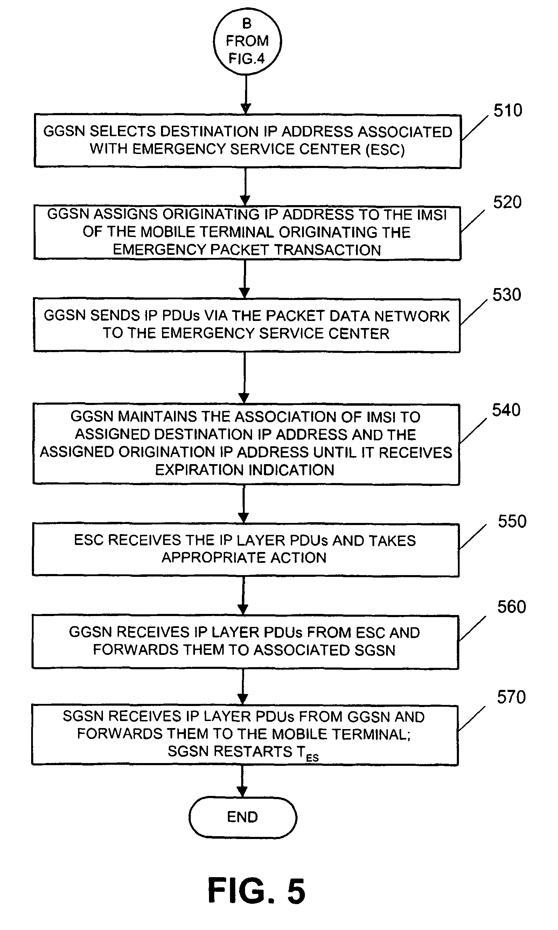

If the SGSN 130 receives any additional LLC layer PDUs from mobile terminal 110 that are associated with this IMSI and that have an "emergency" indication, the SGSN 130 forwards their associated payload to the GGSN 140 as IP layer PDUs and restarts timer Tₑₛ [step 440]. Alternatively, SGSN 130 may start a new timer Tₑₛ for this additional emergency packet transmission from mobile terminal 110. However, if the SGSN 130 receives any additional LLC layer PDUs from a mobile terminal 110 that are associated with this IMSI but do not have an "emergency" indication, the SGSN 130 treats them according to non-emergency processing rules (e.g., a PDP context must exist and the mobile terminal 110 must be GPRS attached) [step 450]. In any event, the GGSN 140 receives the IP layer PDUs along with an "emergency" indication from SGSN 130 [step 460] and processing continues as illustrated in Fig. 5.

After receiving the IP layer PDUs with the "emergency" indication from the SGSN 130, the GGSN 140 selects a destination IP address associated with ESC 170, based on the SGSN 130 (or cell site) from which it received the IP PDUs having the "emergency" indication [Fig. 5, step 510]. For example, the GGSN 140 may access a database of IP addresses associated with various ESCs and may select a destination IP address associated with ESC 170 (Fig. 1), based on the location of the mobile terminal 110 originating the packet data transaction or the location of the SGSN 130 forwarding the packet data to the GGSN 140. The database of addresses associated with the ESCs may be located internal to GGSN 140 or externally therefrom. The GGSN 140 may also assign an originating IP address to the IMSI of the mobile terminal 110 originating the emergency packet transaction to allow ESC 170 to send IP PDUs back to the mobile terminal 110 [step 520].

The GGSN 140 may then send the IP PDUs via PDN 160 (Fig.1) for delivery to the appropriate ESC, such as ESC 170 [step 530]. The GGSN 140 also maintains the association of IMSI to the assigned destination IP address and the assigned originating IP address until it receives an "expiration" indication from the SGSN 130, at which point the association is canceled [step 540]. The expiration indication may occur when timer Tₑₛ times out, as described previously.

The ESC 170 (assuming ESC 170 is the destination ESC) receives the IP PDUs and takes appropriate action [step 550]. For example, the ESC 170 may generate an emergency response message and transmit the message to the mobile terminal 110 originating the emergency packet transaction. In this case, the ESC 170 generates an appropriate message and transmits IP layer PDUs having an originating IP address corresponding to the ESC 170 and a destination address corresponding to mobile terminal 110. The GGSN 140 receives the IP layer PDUs from ESC 170 via PDN 160 [step 560]. These IP layer PDUs may then be forwarded to the associated SGSN 130 using IP tunneling (e.g., GTP as defined for GPRS infrastructure) [step 560]. SGSN 130 receives the IP layer PDUs and forwards them to the mobile terminal 110 [step 570]. The SGSN 130 may also restart timer Tₑₛ after receiving the IP layer PDUs from GGSN 140 [step 570].

Any additional IP layer PDUs received by GGSN 140 from PDN 160 that have an originating IP address corresponding to an ESC for which an IMSI is currently associated and a destination IP address also associated with the same IMSI may be forwarded to the associated SGSN 130 for subsequent delivery to the mobile terminal 110 supporting that IMSI. However, any IP layer PDUs received from PDN 160 having an originating IP address corresponding to an ESC for which an IMSI is not currently associated or a destination IP address not associated with the IMSI corresponding to the originating IP address may be discarded.

The present invention may also handle situations where multiple mobile terminals 110 may have simultaneous emergency packet transactions in progress with the same ESC. In this case, the individual destination IP address assigned to each mobile terminal 110 by the GGSN 140 at initial establishment of the emergency packet transaction may allow for routing subsequent IP layer PDUs generated by the ESC to the correct mobile terminal 110.

The foregoing description of the embodiments of the present invention provides illustration and description, but is not intended to be exhaustive or to limit the invention to the precise form disclosed. Modifications and variations are possible in light of the above teachings or may be acquired from practice of the invention.

For example, the present invention has been described in the context of a mobile terminal and network support infrastructure in a packet data system, such as a system operating in accordance with EGPRS or EGPRS-136. The present invention may also be used in other packet data networks. For example, the present invention may be used in a GPRS system, a cellular digital packet data (CDPD) system or an enhanced data rates for global evolution (EDGE) system. In addition, the present invention has been described with respect to a BS, SGSN and a GGSN performing various operations. In other implementations of the present invention, one or more of the functions described as being performed by the BS, SGSN and GGSN may be performed by another one of these devices. Additionally, in other implementations of the present invention, the functions described as being performed by the BS, SGSN and the GGSN may be performed by a single device. Further, while a series of steps has been described with respect to Figs. 3-5, the order of the steps may be varied in other implementations consistent with the present invention. No element, step, or instruction used in the description of the present application should be construed as critical or essential to the invention unless explicitly described as such.

Further, the present invention is described herein in the context of a global system for mobile communications (GSM) cellular communication environment utilizing packet data networks. While the present invention may be particularly useful for improving the performance of GSM cellular networks, it should be understood that the principles of the present invention may be applied to any cellular or wireless system utilizing other air interfaces, such as time division multiple access (TDMA), code division multiple access (CDMA) or frequency division multiple access (FDMA). It should be further understood that the principles of the present invention may be utilized in hybrid systems that are combinations of two or more of the above air interfaces. In addition, a mobile terminal, in accordance with the present invention, may be designed to communicate with a base station transceiver using any standard based on GSM, TDMA, CDMA, FDMA, a hybrid of such standards or any other standard.

Additionally, the present invention may be embodied as cellular communication systems, methods, and/or computer program products. Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example, but not limited to, an electronic, magnetic, optical, electromagnetic, infrared, or semiconductor system, apparatus, device, or propagation medium. More specific examples (a nonexhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could also include paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

The scope of the invention is defined by the claims and their equivalents.

## Claims

1. A method in a system, comprising a base station (120), a first node (130) and a second node (140), for receiving and forwarding emergency packet data, the method **characterized by**:
the base station (120):
receiving (330) a packet channel request message comprising an emergency indication from a mobile terminal, and
transmitting (330) an uplink assignment message to the mobile terminal; the first node (130):
receiving (350) the emergency packet data via an uplink of a packet data channel, and
forwarding (420) the emergency packet data and the emergency indication to the second node; and
the second node (140):
receiving (460) the emergency packet data and the emergency indication from the first node,
determining (510) a destination address for the emergency packet data, the destination address identifying an emergency service entity, and
forwarding (530) the emergency packet data to the emergency service entity identified by the destination address.

2. The method of claim 1, wherein when determining a destination address for the emergency packet data, the second node accesses a database and selects the destination address from the database, the database comprising a plurality of destination addresses associated with a plurality of emergency service entities.

3. The method of claim 2, wherein when selecting the destination address from the database, the second node selects the destination address based on information relating to a location of the mobile terminal transmitting the emergency packet data.

4. The method of claim 1, wherein the second node:
receives packet data from the emergency service entity, and forwards the packet data to the mobile terminal.

5. The method of claim 1, wherein the first node comprises a serving general packet radio service, GPRS, support node, SGSN, and the second node comprises a gateway GPRS support node, GGSN.

6. The method of claim 1, wherein the first node further:
identifies an international mobile subscriber identity, IMSI, associated with the mobile terminal as being in a ready state, after receiving the emergency packet data.

7. The method of claim 6, wherein the first node further:
starts a timer after receiving the emergency packet data, the timer set to a time period associated with processing the emergency packet data, transmits a notification to the second node if the time period is reached, and
identifies the IMSI associated with the mobile terminal as being in an idle state, if the time period is reached.

8. A system for receiving and forwarding emergency packet data,
**characterized by**:
a base station (120) that includes:
means adapted to receive (330) a packet channel request message comprising an emergency indication from a mobile terminal (110), and
means adapted to transmit (330) an uplink assignment message to the mobile terminal (110);
a first node (130) that includes:
means adapted to receive (350) the emergency packet data via an uplink of a packet data channel, and
means adapted to forward (420) the emergency packet data and the emergency indication;
and a second node (140) that includes:
means adapted to receive (460) the emergency packet data and the emergency indication from the first node (130),
means adapted to determine (510) a destination address for the emergency packet data, the destination address identifying an emergency service entity, and
means adapted to forward (530) the emergency packet data to the emergency service entity identified by the destination address.

9. The system of claim 8, further comprising:
a database comprising a plurality of destination addresses associated with a plurality of emergency service entities, and
wherein determining the destination address for the emergency packet data includes accessing the database and selecting the destination address from the database.

10. The system of claim 9, wherein the destination address is selected based on information relating to a location of the mobile terminal transmitting the emergency packet data.

11. The system of claim 8, wherein the second node includes:
means adapted to receive packet data from the emergency service entity, and
means adapted to forward the packet data to the mobile terminal.

12. The system of claim 8, wherein the first node comprises a serving general packet radio service, GPRS, support node, SGSN, and the second node comprises a gateway GPRS support node, GGSN.

13. The system of claim 8, wherein the first node further includes:
means adapted to identifiy an international mobile subscriber identity, IMSI, associated with the mobile terminal as being in a ready state, after receiving the emergency packet data.

14. The system of claim 13, wherein the first node further inlcudes:
means adapted to start a timer after receiving the emergency packet data, the timer set to a time period associated with processing the emergency packet data,
means adapted to transmit a notification to the second node if the time period is reached, and
means adapted to identify the IMSI associated with the mobile terminal as being in an idle state, if the time period is reached.

## Patentansprüche

1. Verfahren in einem System, umfassend eine Basisstation (120), einen ersten Knoten (130) und einen zweiten Knoten (140), zum Empfangen und Weiterleiten von Notfall-Paketdaten, wobei das Verfahren **dadurch gekennzeichnet ist, daß**
die Basisstation (120)
eine Paketkanalanforderungsnachricht, die eine Notfallmeldung umfaßt, von einem mobilen Endgerät empfängt (330) und
eine Aufwärtsstreckenzuweisungsnachricht an das mobile Endgerät überträgt (330);
der erste Knoten (130)
die Notfall-Paketdaten über eine Aufwärtsstrecke eines Paketdatenkanals empfängt (350) und
die Notfall-Paketdaten und die Notfallmeldung an den zweiten Knoten weiterleitet (420); und
der zweite Knoten (140)
die Notfall-Paketdaten und die Notfallmeldung vom ersten Knoten empfängt (460),
eine Zieladresse für die Notfall-Paketdaten bestimmt, wobei die Zieladresse eine Notfalldienstinstanz identifiziert (510) und
die Notfall-Paketdaten an die von der Zieladresse identifizierte Notfalldienstinstanz weiterleitet (530).

2. Verfahren nach Anspruch 1, wobei beim Bestimmen einer Zieladresse für die Notfall-Paketdaten der zweite Knoten auf eine Datenbasis zugreift und die Zieladresse aus der Datenbasis auswählt, wobei die Datenbasis eine Vielzahl von Zieladressen, die einer Vielzahl von Notfalldienstinstanzen zugeordnet sind, umfaßt.

3. Verfahren nach Anspruch 2, wobei beim Auswählen der Zieladresse aus der Datenbasis der zweite Knoten die Zieladresse auf der Grundlage von Information bezüglich eines Standortes des mobilen Endgeräts, das die Notfall-Paketdaten überträgt, auswählt.

4. Verfahren nach Anspruch 1, wobei der zweite Knoten
Paketdaten von der Notfalldienstinstanz empfängt und die Paketdaten an das mobile Endgerät weiterleitet.

5. Verfahren nach Anspruch 1, wobei der erste Knoten einen Serving General Packet Radio Service, GPRS, Support-Knoten, SGSN, und der zweite Knoten einen Gateway GPRS Support-Knoten, GGSN, umfaßt.

6. Verfahren nach Anspruch 1, wobei der erste Knoten ferner
eine internationale mobile Teilnehmerkennung, IMSI, die dem mobilen Endgerät zugeordnet ist, als in einem Bereitzustand befindlich identifiziert, nachdem die Notfall-Paketdaten empfangen worden sind.

7. Verfahren nach Anspruch 6, wobei der erste Knoten ferner
einen Zeitgeber startet, nachdem die Notfall-Paketdaten empfangen worden sind, wobei der Zeitgeber auf eine Zeitperiode eingestellt ist, die der Verarbeitung der Notfall-Paketdaten zugeordnet ist,
eine Benachrichtigung an den zweiten Knoten überträgt, wenn die Zeitperiode erreicht ist, und
die IMSI, die dem mobilen Endgerät zugeordnet ist, als in einem Ruhezustand befindlich identifiziert, wenn die Zeitperiode erreicht ist.

8. System zum Empfangen und Weiterleiten von Notfall-Paketdaten, **gekennzeichnet durch**:
eine Basisstation (120), die aufweist:
Mittel, die dafür eingerichtet sind, eine Paketkanalanforderungsnachricht, die eine Notfallmeldung umfaßt, von einem mobilen Endgerät (110) zu empfangen (330), und
Mittel, die dafür eingerichtet sind, eine Aufwärtsstreckenzuweisungsnachricht an das mobile Endgerät (110) zu übertragen (330);
einen erster Knoten (130), der aufweist:
Mittel, die dafür eingerichtet sind, die Notfall-Paketdaten über eine Aufwärtsstrecke eines Paketdatenkanals zu empfangen (350), und
Mittel, die dafür eingerichtet sind, die Notfall-Paketdaten und die Notfallmeldung weiterzuleiten (420);
und einen zweiten Knoten (140), der aufweist:
Mittel, die dafür eingerichtet sind, die Notfall-Paketdaten und die Notfallmeldung vom ersten Knoten (130) zu empfangen (460),
Mittel, die dafür eingerichtet sind, eine Zieladresse für die Notfall-Paketdaten zu bestimmen (510), wobei die Bestimmungsadresse die Notfalldienstinstanz identifiziert, und
Mittel, die dafür eingerichtet sind, die Notfall-Paketdaten an die **durch** die Zieladresse identifizierte Notfalldienstinstanz weiterzuleiten (530).

9. System nach Anspruch 8, ferner umfassend:
eine Datenbasis, die eine Vielzahl von Zieladressen umfaßt, die einer Vielzahl von Notfalldienstinstanzen zugeordnet sind, und
wobei das Bestimmen der Zieladresse für die Notfall-Paketdaten aufweist: Zugreifen auf die Datenbasis und Auswählen der Zieladresse aus der Datenbasis.

10. System nach Anspruch 9, wobei die Zieladresse auf der Grundlage von Information bezüglich eines Standortes des mobilen Endgeräts, das die Notfall-Paketdaten überträgt, ausgewählt wird.

11. System nach Anspruch 8, wobei der zweite Knoten aufweist:
Mittel, die dafür eingerichtet sind, Paketdaten von der Notfalldienstinstanz zu empfangen, und Mittel, die dafür eingerichtet sind, die Paketdaten an das mobile Endgerät weiterzuleiten.

12. System nach Anspruch 8, wobei der erste Knoten einen Serving General Packet Radio Service, GPRS, Support-Knoten, SGSN, und der zweite Knoten einen Gateway GPRS Support-Knoten, GGSN, umfaßt.

13. System nach Anspruch 8, wobei der erste Knoten ferner aufweist:
Mittel, die dafür eingerichtet sind, eine internationale mobile Teilnehmerkennung, IMSI, die dem mobilen Endgerät zugeordnet ist, als in einem Bereitzustand befindlich zu identifizieren, nachdem die Notfall-Paketdaten empfangen worden sind.

14. System nach Anspruch 13, wobei der erste Knoten ferner aufweist:
Mittel, die dafür eingerichtet sind, einen Zeitgeber zu starten, nachdem Notfall-Paketdaten empfangen worden sind, wobei der Zeitgeber auf eine Zeitperiode eingestellt ist, die der Verarbeitung der Notfall-Paketdaten zugeordnet ist,
Mittel, die dafür eingerichtet sind, eine Benachrichtigung an den zweiten Knoten zu übertragen, wenn die Zeitperiode erreicht ist, und
Mittel, die dafür eingerichtet sind, die IMSI, die dem mobilen Endgerät zugeordnet ist, als in einem Ruhezustand befindlich zu identifizieren, wenn die Zeitperiode erreicht ist.

## Revendications

1. Procédé, dans un système, comprenant une station de base (120), un premier noeud (130) et un second noeud (140), pour recevoir et renvoyer des données par paquets d'urgence, le procédé étant
**caractérisé par**:
la station de base (120):
qui reçoit (330) un message de requête de canal par paquets comprenant une indication d'urgence provenant d'un terminal mobile, et
qui émet (330) un message d'assignation de liaison montante sur le terminal mobile;
le premier noeud (130):
qui reçoit (350) les données par paquets d'urgence via une liaison montante d'un canal de données par paquets, et
qui renvoie (420) les données par paquets d'urgence et l'indication d'urgence sur le second noeud; et
le second noeud (140):
qui reçoit (460) les données par paquets d'urgence et l'indication d'urgence depuis le premier noeud,
qui détermine (510) une adresse de destination pour les données par paquets d'urgence, l'adresse de destination identifiant une entité de service d'urgence, et
qui renvoie (530) les données par paquets d'urgence sur l'entité de service d'urgence identifiée par l'adresse de destination.

2. Procédé selon la revendication 1, dans lequel, lors de la détermination d'une adresse de destination pour les données par paquets d'urgence, le second noeud accède à une base de données et sélectionne l'adresse de destination à partir de la base de données, la base de données comprenant une pluralité d'adresses de destination associées à une pluralité d'entités de service d'urgence.

3. Procédé selon la revendication 2, dans lequel, lors de la sélection de l'adresse de destination à partir de la base de données, le second noeud sélectionne l'adresse de destination sur la base d'une information relative à un emplacement du terminal mobile émettant les données par paquets d'urgence.

4. Procédé selon la revendication 1, dans lequel le second noeud:
reçoit des données par paquets depuis l'entité de service d'urgence et renvoie les données par paquets sur le terminal mobile.

5. Procédé selon la revendication 1, dans lequel le premier noeud comprend un service radio par paquets général de service, GPRS, noeud de support, SGSN, et le second noeud comprend un noeud de support GPRS de passerelle, GGSN.

6. Procédé selon la revendication 1, dans lequel le premier noeud en outre:
identifie une identité d'abonné de mobile internationale, IMSI, associée au terminal mobile comme étant dans un état prêt, après la réception des données par paquets d'urgence.

7. Procédé selon la revendication 6, dans lequel le premier noeud en outre:
démarre une minuterie après la réception des données par paquets d'urgence, la minuterie établit une période temporelle associée au traitement des données par paquets d'urgence, émet une notification sur le second noeud si la période temporelle est atteinte, et
identifie l'IMSI associée au terminal mobile comme étant dans un état d'attente si la période temporelle est atteinte.

8. Système pour recevoir et renvoyer des données par paquets d'urgence, **caractérisé par**:
une station de base (120) qui inclut:
un moyen adapté pour recevoir (330) un message de requête de canal par paquets comprenant une indication d'urgence depuis un terminal mobile (110), et
un moyen adapté pour émettre (330) un message d'assignation de liaison montante sur le terminal mobile (110);
un premier noeud (130) qui inclut:
un moyen pour recevoir (350) les données par paquets d'urgence via une liaison montante d'un canal de données par paquets, et
un moyen adapté pour renvoyer (420) les données par paquets d'urgence et l'identification d'urgence;
et un second noeud (140) qui inclut:
un moyen adapté pour recevoir (460) les données par paquets d'urgence et l'identification d'urgence depuis le premier noeud (130),
un moyen adapté pour déterminer (510) une adresse de destination pour les données par paquets d'urgence, l'adresse de destination identifiant une entité de service d'urgence, et
un moyen adapté pour renvoyer (530) les données par paquets d'urgence sur l'entité de service d'urgence identifiée par l'adresse de destination.

9. Système selon la revendication 8, comprenant en outre:
une base de données comprenant une pluralité d'adresses de destination associées à une pluralité d'entités de service d'urgence, et
dans lequel la détermination de l'adresse de destination pour les données par paquets d'urgence inclut l'accès à la base de données et la sélection de l'adresse de destination à partir de la base de données.

10. Système selon la revendication 9, dans lequel l'adresse de destination est sélectionnée sur la base d'une information relative à un emplacement du terminal mobile qui émet les données par paquets d'urgence.

11. Système selon la revendication 8, dans lequel le second noeud inclut:
un moyen adapté pour recevoir des données par paquets depuis l'entité de service d'urgence, et
un moyen adapté pour renvoyer les données par paquets sur le terminal mobile.

12. Système selon la revendication 8, dans lequel le premier noeud comprend un service radio par paquets général de service, GPRS, noeud de support, SGSN, et le second noeud comprend un noeud de support GPRS de passerelle, GGSN.

13. Système selon la revendication 8, dans lequel le premier noeud inclut en outre:
un moyen adapté pour identifier une identité d'abonné de mobile internationale, IMSI, associée au terminal mobile comme étant dans un état prêt, après la réception des données par paquets d'urgence.

14. Système selon la revendication 13, dans lequel le premier noeud inclut en outre:
un moyen adapté pour démarrer une minuterie après la réception des données par paquets d'urgence, la minuterie établit une période temporelle associée au traitement des données par paquets d'urgence,
un moyen adapté pour émettre une notification sur le second noeud si la période temporelle est atteinte, et
un moyen adapté pour identifier l'IMSI associée au terminal mobile comme étant dans un état d'attente si la période temporelle est atteinte.
